# EUROPÄISCHE PATENTANMELDUNG

(11) **EP 1 762 762 A2**
(43) Veröffentlichungstag der Anmeldung: **14.03.2007**
(21) Anmeldenummer: 06018868.7
(22) Anmeldetag: 08.09.2006
(51) Int. Cl.: F16K 27/10

(54) **Ventilgehäusekörper**

(30) Priorität: 09.09.2005 DE 102005043008
(71) Anmelder: GEMÜ Gebrüder Müller Apparatebau GmbH & Co. KG, 74653 Ingelfingen (DE)
(72) Erfinder: Müller, Fritz, 74653 Ingelfingen (DE)
(74) Vertreter: Hering, Hartmut

(57) **Zusammenfassung**

Es wird ein Ventilgehäusekörper (1; 10) angegeben, welcher insbesondere für ein Sitzventil bestimmt ist. Der Ventilgehäusekörper (1; 10) ist in Form einer Hohlkugel ausgelegt und umfasst wenigstens zwei Schalenteile (5, 6; 5' 6'). Eines der Schalenteile (5, 5') weist den Einbaudurchgang (2) für das Stellglied, gegebenenfalls den Ventilsitz (8, 8'), und den wenigstens einen Zugang (3) auf. Das andere Schalenteil (6; 6') weist den wenigstens einen Ausgang (4) auf. Gegebenenfalls kann für den Ventilsitz (8') ein zu den Schalenteilen (5, 6; 5' 6') gesondertes Bauteil (11) vorgesehen sein. Die Schalenteile (5, 6; 5' 6') und gegebenenfalls das Ventilsitz-Bauteil (11) können aus Kunststoff, vorzugsweise mittels Spritzgießen, oder aus metallischem Material, insbesondere Edelstahl, vorzugsweise mittels Tiefziehen, hergestellt sein. Die Schalenteile (5, 6; 5' 6') und gegebenenfalls das Ventilsitz-Bauteil (11) werden längs ihrer Trennlinie (7) mittels Schweißen, Klemmen und/oder Spannen oder beispielsweise einer Flanschverbindung mit Verschraubung fest miteinander verbunden.

## Beschreibung

Die Erfindung befasst sich mit einem Ventilgehäusekörper, welcher insbesondere für ein Sitzventil bestimmt ist, wenigstens einen Einbaudurchgang für ein Stellglied für ein Schließelement, welches mit wenigstens einem Ventilsitz im Gehäuseinnenraum zusammenarbeitet, wenigstens einen Zugang und wenigstens einen Ausgang aufweist.

Ventilgehäusekörper dieser Bauart für unterschiedliche Sitzventile, wie Schrägsitzventile oder dergleichen, werden heutzutage üblicherweise als Gussteile ausgelegt, an welchen der Zugang und der Ausgang sowie gegebenenfalls der Einbaudurchgang für ein Stellglied für ein Schließelement unmittelbar ausgeformt sind. Dies hat zur Folge, dass man für jeden entsprechenden Ventiltyp einen hierfür bestimmten Ventilgehäusekörper mittels Gießen herstellen muss. Derartige gegossene Ventilgehäusekörper müssen meist noch zeitaufwendig nachbearbeitet werden, und zudem sind sie hinsichtlich der Gestehungskosten relativ teuer. Da derartig gegossene Ventilgehäusekörper zudem massiv sind, sind sie auch relativ schwer.

Die Erfindung zielt darauf ab, einen Ventilgehäusekörper, insbesondere für ein Sitzventil, bereitzustellen, welches sich kostengünstig darstellen lässt, eine Gewichts- und Materialreduzierung gestattet und zudem universell für unterschiedliche Ventilkonstruktionen, insbesondere Sitzventilkonstruktionen, einsetzbar ist.

Nach der Erfindung wird hierzu ein Ventilgehäusekörper, insbesondere für ein Sitzventil, mit einem Einbaudurchgang für ein Stellglied für ein Schließelement, welches mit wenigstens einem Ventilsitz im Gehäuseinnenraum zusammenarbeitet, wenigstens einem Zugang und wenigstens einem Ausgang bereitgestellt, welcher sich dadurch auszeichnet, dass der Gehäusekörper in Form einer Hohlkugel ausgelegt ist und wenigstens zwei Schalenteile umfasst, wobei eines der Schalenteile den Einbaudurchgang für das Stellglied, gegebenenfalls den Ventilsitz und den wenigstens einen Zugang und das andere Schalenteil den wenigstens einen Ausgang aufweist.

Der erfindungsgemäße Ventilgehäusekörper ist somit im Gegensatz zu einem Gussteil nicht massiv ausgelegt, sondern er hat eine Hohlkörperkonstruktion, um das Eigengewicht des Ventilgehäusekörpers einerseits zu reduzieren und zum anderen auch Grundmaterial für die Herstellung des Ventilgehäusekörpers einzusparen. Ferner ist der Ventilgehäusekörper nach der Erfindung wenigstens zweiteilig ausgelegt und umfasst ein erstes Schalenteil, in welchem ein Einbaudurchgang für das Stellglied, gegebenenfalls der Ventilsitz und wenigstens ein Zugang vorgesehen sind, während an dem zweiten, hierzu komplementären Schalenteil, wenigstens ein Ausgang vorhanden ist. Diese mehrteilige Konstruktion des Gehäusekörpers gestattet eine Auslegung eines Gehäusekörpers nach Art eines Baukastensystems, wobei man, beispielsweise standardmäßig ein erstes Schalenteil mit dem Einbaudurchgang für das Stellglied, den Ventilsitz und den Zugang und für das zweite Schalenteil, ein solches Teil hat, dass es den Ausgang aufweist, wobei man die Anzahl der Ausgänge an dem zweiten Schalenteil hinsichtlich ihrer Anordnung und Ausrichtung längs des Umfangs des zweiten Schalenteils also beliebig wählen kann.

Ein solcher Ventilgehäusekörper mit modularem Aufbau ermöglicht somit eine universelle Zusammenstellung von jeweils mindestens zwei Schalenteilen in einer solchen Weise, dass man auf möglichst kostengünstige Weise eine anwendungsspezifische Anpassung des Ventilgehäusekörpers vornehmen kann. Auch lässt sich das jeweilige Schalenteil des Ventilgehäusekörpers auf den jeweils gewünschten Ventiltyp anpassen, und zwar nicht nur hinsichtlich des Zugangs oder der Zugänge, sondern auch hinsichtlich des Ausgangs oder der Ausgänge sowie gegebenenfalls hinsichtlich der Ventilbetätigungsart, so dass sich beispielsweise auch Eckventile, Ventile mit mehreren Antriebs- und Betätigungseinrichtungen und dergleichen, ausgehend von einem gemeinsamen Grundprinzip der Auslegung des Ventilgehäusekörpers, in entsprechender Weise gestalten lassen.

Zweckmäßigerweise ist der hohlkugelförmige Gehäusekörper längs einer Durchmessertrennlinie geteilt, die weder durch den Einbaudurchgang, noch den wenigstens einen Zugang und/oder den wenigstens einen Ausgang geht.

Mit anderen Worten ausgedrückt ist die Trennlinie des hohlkugelförmigen Gehäusekörpers derart gewählt, dass der wenigstens eine Zugang und/oder der wenigstens eine Einbaudurchgang vollständig in einem der Schalenteile und der wenigstens eine Ausgang in dem jeweils hierzu komplementär ausgelegten Schalenteil vorgesehen sind. Hierdurch erhält man eine Teilung des hohlkugelförmigen Gehäusekörpers mittels einer durchgehenden Trennlinie, wodurch sich die feste Verbindung der Schalenteile zu dem hohlkugelförmigen Ventilgehäusekörper mit durchgehenden Nahtstellen verwirklichen lässt.

Im Hinblick auf eine möglichst freie Gestaltungsweise für die Zugangs- und Einbauseite und Ausgangsseite hat es sich als zweckmäßig erwiesen, den hohlkugelförmigen Gehäusekörper in einer Schnittebene zu teilen, die etwa unter 45° zur Kugelhauptachse verläuft. Hierdurch können sowohl der oder die Zugänge als auch der oder die Ausgänge über einen relativ großen Kugelmantelbereich verteilt werden, so dass sich auch eine Eckventilkonstruktion ohne Schwierigkeiten verwirklichen lässt, bei der der Zugang und der Ausgang unter einem Winkel relativ zueinander liegen, welcher vorzugsweise kleiner als 180° ist.

Zur festen Verbindung der Schalenteile kommen unterschiedliche Verbindungsmethoden in Betracht. So können die Schalenteile mittels Schweißen, insbesondere Laserschweißen, entlang der Trennlinie fest miteinander verbunden werden. Auch kommt als eine weitere alternative Verbindung eine Klemm- und/oder Spannverbindung, wie eine Triclampverbindung, in Betracht. Ferner können die Schalenteile auch an der Trennlinie gegebenenfalls über eine Flanschverbindung mit Verschraubung fest miteinander verbunden sein. Auch kommen Kombinationen hiervon in Betracht. Alle diese Verbindungsmethoden gestatten nicht nur eine körperlich feste Verbindung der Schalenteile, sondern auch eine Fluiddichte zuverlässige Verbindung derselben.

Auch können die Schalenteile des Ventilgehäusekörpers aus unterschiedlichen Materialien hergestellt sein. So können die Schalenteile beispielsweise aus Kunststoff, vorzugsweise mittels Spritzgießen, hergestellt sein. Alternativ können die Schalenteile aus metallischem Material, insbesondere Edelstahl, hergestellt sein, wobei zur Herstellung vorzugsweise das Tiefziehen in Betracht kommt. Alle diese Herstellungsmethoden für die Schalenteile sind fertigungstechnisch kostengünstige Herstellungsverfahren, so dass sich die Schalenteile trotz des Einsatzes von hochwertigen Materialien auf kostengünstige Weise herstellen lassen.

Insbesondere sind der oder die Ausgänge variabel am zugeordneten Schalenteil befestigbar. Auf diese Weise lässt sich das zweite Schalenteil beispielsweise individuell auf die jeweiligen anwendungsspezifischen Erfordernisse hinsichtlich des oder der Ausgänge anpassen. Der oder die Ausgänge können auch gegebenenfalls unterschiedliche Innendurchmesser haben, so dass sich der erfindungsgemäße Ventilgehäusekörper auch als eine Art Adapter zwischen unterschiedlichen Leitungsdurchmessern bei Leitungsverzweigungen einsetzen lässt.

Um möglichst günstige Strömungsverhältnisse für das durch den Ventilgehäusekörper strömende fluide Medium zu haben, sollte der Ventilsitz im Innenraum des Ventilgehäusekörpers möglichst nahe am Ausgang angeordnet sein.

Um dem Ventilsitz am Zugang im zugeordneten hohlkugelförmigen Gehäusekörperteil (Schalenteil) eine ausreichende Eigenstabilität auch im Hinblick auf entsprechende Schließdrücke des mit dem Ventilsitz zusammenarbeitenden Schließgliedes zu verleihen, kann der oder die Zugänge im Gehäuseinnenraum mittels stegförmigen Abstützungen zusätzlich versteift sein.

Ferner gestattet die erfindungsgemäße Ventilgehäusekörperkonstruktion auch eine Integration eines Drucksensors in den hohlkugelförmigen Gehäusekörper selbst, so dass sich die Druckverhältnisse im Innenraum des hohlkugelförmigen Gehäusekörpers zuverlässig einstellen und überwachen lassen.

Dank der erfindungsgemäßen hohlkugelförmigen Konstruktion des Ventilgehäusekörpers kann dieser auch als Mehrwegeventil ausgelegt werden.

Um eine zuverlässige Zentrierung und Ausrichtung der wenigstens zwei Schalenteile zueinander an der Schnittstelle zu erreichen, haben die Schalenteile vorzugsweise zueinander komplementär ausgebildete Zentrieransätze.

Gemäß einer weiteren bevorzugten Ausgestaltungsform nach der Erfindung ist der Ventilgehäusekörper derart ausgestaltet, dass für den Ventilsitz ein zu den Schalenteilen gesondertes Bauteil vorgesehen ist. Bei einer solchen Ausgestaltungsform werden die Universalität und die Gestaltungsfreiheit hinsichtlich der zu realisierenden Ventile erweitert. Dank dieses modularen Aufbaus und der Tatsache, dass dem Ventilsitz ein gesondertes Ventilsitz-Bauteil zugeordnet ist, lassen sich die Vorzüge des Baukastensystems noch effektiver nutzen. Dabei lassen sich nämlich die Schalenteile des Ventilgehäusekörpers frei und unabhängig von der Ausgestaltung des Ventilssitzes und dessen Anordnung gestalten oder fertigen. Da ferner dem Ventilsitz ein gesondertes Bauteil zugeordnet ist, können mit den Schalenteil des Baukastensystems unterschiedliche Ventilsitzbauarten verwirklicht werden, und hierzu werden dann die jeweils gewünschten und erforderlichen Ventilsitz-Bauteile ausgestaltet. Hierdurch vereinfacht sich auch die Herstellung und Fertigung, da der im Ventilgehäusekörper liegende Ventilsitz ohne Kompromisse bei den Schalenteilen eingehen zu müssen, im wesentlichen frei wählbar gestaltet werden kann.

Vorzugsweise sind hierbei die Schalenteile relativ zu dem Bauteil mit dem Ventilsitz, vorzugsweise durch Verdrehen, ausrichtbar. Wenn man bei dieser Bauform des Ventilgehäusekörpers insgesamt drei Bauelemente, nämlich zwei Schalenteile und das Ventilsitz-Bauteil, hat, so lassen sich diese drei Bauteile in der jeweils gewünschten Weise relativ zueinander, beispielsweise durch Verdrehen, ausrichten, und an die jeweils gewünschten Erfordernisse anpassen. Hierdurch wird die Gestaltungsfreiheit verbessert.

Nach dem Ausrichten zu den Schalenteilen wird dann das Bauteil mit dem Ventilsitz vorzugsweise fest mit den Schalenteilen verbunden. Hierzu können Schweißverbindungen, insbesondere Laserschweißverbindungen, Klemm- und/oder Spannverbindungen, insbesondere Triclampverbindungen, oder Verbindungen mittels einer Verschraubung und einer Flanschverbindung oder dergleichen vorgesehen werden.

Vorzugsweise ist das Bauteil mit dem Ventilsitz scheibenförmig ausgebildet, und ist an der Durchmessertrennlinie der Schalenteile zwischengelegt.

Zusammenfassend ist es bei der erfindungsgemäßen Auslegung des Ventilgehäusekörpers wesentlich, dass man mittels eines modularen Baukastensystems eine Vielseitigkeit von unterschiedlich ausgelegten Ventilen mit einer möglichst günstigen Fertigungsmethode verwirklichen kann. Insbesondere ist der Ventilgehäusekörper hierzu als ein Hohlkugelkörper ausgebildet und in Schalenteile unterteilt, welche sich mittels Spritzgießen oder Tiefziehen auf kostengünstige Weise herstellen lassen und mit entsprechenden anwendungsspezifischen Gegebenheiten eventuell ausgestalten sowie auf fertigungstechnisch günstige Weise fest miteinander verbinden lassen.

Die Erfindung wird nachstehend anhand einer bevorzugten Ausführungsform unter Bezugnahme auf die beigefügte Zeichnung ohne jeglichen beschränkenden Charakter näher erläutert. In der Zeichnung gilt:
- Fig. 1: ist eine schematische Seitenansicht des Ventilgehäusekörpers gemäß einer bevorzugten Ausführungsform nach der Erfindung,
- Fig. 2: ist eine schematische Schnittansicht desselben,
- Fig. 3: ist eine schematische Schnittansicht einer weiteren bevorzugten Ausführungsform eines Ventilgehäusekörpers,
- Fig. 4: ist eine perspektivisch Einzeldarstellung eines Bauteils für den Ventilsitz, welches gesondert zu den Schalenteilen ausgebildet ist, und
- Fig. 5: ist eine schematische Schnittansicht eines gesonderten Bauteils mit dem Ventilsitz als Einzelteildarstellung.

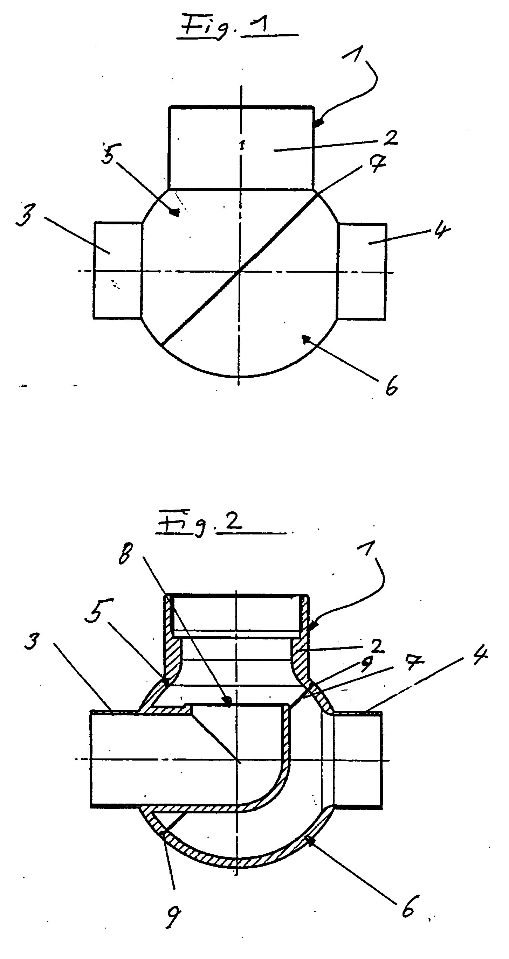

In den Figuren 1 und 2 ist schematisch ein insgesamt mit 1 bezeichneter Ventilgehäusekörper gezeigt. Der Ventilgehäusekörper 1 weist einen Einbaudurchgang 2 für ein Stellglied für ein Schließelement, einen Zugang 3 sowie einen Ausgang 4 auf.

Der Ventilgehäusekörper 1 ist in Form einer Hohlkugel ausgebildet und umfasst wenigstens zwei Schalenteile 5, 6. Das Schalenteil 5 weist den Zugang 3 und den Einbaudurchgang 2 für ein nicht näher dargestelltes Stellglied für ein ebenfalls nicht näher dargestelltes Schließelement auf, also einen Einbaudurchgang für den so genannten Antrieb des Ventils auf.

Wie aus Figur 1 zu ersehen ist, ist der hohlkugelförmig ausgelegte Ventilgehäusekörper 1 längs einer Trennlinie geteilt, welche mit 7 bezeichnet ist. Diese Trennlinie 7 verläuft vorzugsweise unter einem Winkel von 45° zur Kugelhauptachse, wie dies aus Fig. 1 zu ersehen ist. Allgemein gesprochen ist diese Trennlinie 7 des Ventilgehäusekörpers 1 derart gewählt, dass sie weder durch den Einbaudurchgang 2 noch durch den Zugang 3 und auch nicht durch den Ausgang 4 geht.

Aus der Schnittansicht nach Figur 2 ist zu ersehen, dass die Schalenteile 5, 6 als Hohlkörper ausgebildet sind, und sie können beispielsweise aus Kunststoff, vorzugsweise mittels Spritzgießen, hergestellt sein. Die Schalenteile 5,6 können alternativ aus metallischem Material, insbesondere Edelstahl, vorzugsweise mittels Tiefziehen, hergestellt sein.

Aus Figur 2 ist auch ein im Innenraum des hohlförmigen Gehäusekörpers 1 angeordneter Ventilsitz 8 zu ersehen, welcher beim dargestellten Ausführungsbeispiel als Plansitz ausgebildet ist. Der Ventilsitz 8 kann gegebenenfalls auch als Schrägsitz ausgebildet sein. Mit diesem Ventilsitz arbeitet ein nicht dargestelltes Schießglied zusammen, welches mittels einer ebenfalls nicht dargestellten Betätigungseinrichtung in Schließstellung und Offenstellung beaufschlagbar ist. Das Stellglied mit dem Schließelement sowie gegebenenfalls ein hierfür vorgesehener Antrieb werden über den Einbaudurchgang 2 in den Ventilgehäusekörper 1 eingesetzt. Um möglichst günstige Fluidströmungsverhältnisse im Zugang 3 und im Ausgang 4 zu haben, sollte der Ventilsitz 8 möglichst nahe zum Ausgang 4 angeordnet sein.

Bei dem dargestellten Ausführungsbeispiel sind die beiden Schalenteile 5,6 längs der Trennlinie 7 beispielsweise mittels Schweißen, insbesondere mittels Laserschweißen, miteinander verbunden. Zur wechselseitigen Ausrichtung der Schalenteile 5,6 sind an der Trennlinie 7 der Schalenteile 5,6 Zentrieransätze 9 vorgesehen.

Bei dem dargestellten Ausführungsbeispiel ist der hohlkugelförmig ausgebildete Ventilgehäusekörper 1 aus zwei Schalenteilen 5,6 zusammengesetzt. Dies braucht aber nicht notwendigerweise der Fall zu sein, sondern es können auch mehr als zwei Schalenteile 5,6 zur Bildung des hohlkugelförmigen Ventilgehäusekörpers 1 vorgesehen sein, welche dann an den entsprechenden Trennlinien fest miteinander verbunden sind.

Obgleich bei dem dargestellten bevorzugten Ausführungsbeispiel ein Zugang 3 gezeigt ist, kann das Schalenteil 5 auch gegebenenfalls mehrere Zugänge aufweisen, und es können auch mehrere Ventilsitze im Gehäuseinnenraum des Ventilgehäusekörpers 1 angeordnet sein.

Bei dem Ausführungsbeispiel nach den Figuren 1 und 2 liegen der Zugang 3 und der Ausgang 4 einander etwa gegenüber und haben in etwa den gleichen Durchmesser. Auch dies braucht nicht notwendigerweise der Fall zu sein, sondern der Ausgang 4 kann beispielsweise unter einem Winkel von kleiner als 180° zum Zugang 3 und umgekehrt angeordnet sein. Auch kann das Schalenteil 6 mehr als einen Ausgang 4 aufweisen, und die Ausgänge können gegebenenfalls auch unterschiedliche Innendurchmesser haben, so dass der Ventilgehäusekörper 1 zugleich als ein Adapter ausgelegt sein kann.

Gegebenenfalls kann im Innenraum des hohlkugelförmigen Gehäusekörpers 1 wenigstens ein Drucksensor angeordnet sein, mittels welchem sich der Druck im Innern des Gehäusekörpers 1 erfassen und überwachen lässt. Auch können gegebenenfalls die Signale des Drucksensors zu Steuerungszwecken, beispielsweise für den Antrieb des Schließelements genutzt werden.

In der Zeichnung ist zur Verbindung der beiden Schalenteile 5,6 an der Trennlinie 7 eine Schweißnaht vorgesehen. Alternativ können die Schalenteile 5,6 gegebenenfalls durch Klemmen und/oder Spannen fest miteinander verbunden sein, wozu beispielsweise eine Triclampverbindung umfassend Flansche und ein Umschließungsteil in Form eines Spannringes vorgesehen sein kann. Ferner können die Schalenteile 5,6 auch gegebenenfalls durch eine Flanschverbindung und eine zugeordnete Verschraubung fest miteinander verbunden sein.

An Hand den Figuren 3 bis 5 wird eine bevorzugte Ausführungsform eines dort insgesamt mit 10 bezeichneten Ventilgehäusekörpers erläutert. Gleiche oder ähnliche Teile zu der voranstehend beschriebenen bevorzugten Ausführungsform sind mit denselben Bezugszeichen versehen. Wie bei der voranstehend beschriebenen bevorzugten Ausführungsform hat der Ventilgehäusekörper 10 beim dargestellten Ausführungsbeispiel einen Zugang 3, einen Ausgang 4, einen Einbaudurchgang 2 und einen Ventilsitz 8. Bei dem Ventilgehäusekörper 10 umfasst ein erstes Schalenteil 5' nur den Zugang 3, während ein zweites Schalenteil 6' den Ausgang 4 und den Einbaudurchgang 2 umfasst. Für den Ventilsitz 8' ist ein zu den Schaltenteilen 5', 6' gesondertes Bauteil, ein sogenanntes Ventilsitz-Bauteil 11 vorgesehen. Dieses Bauteil 11 kann aus den gleichen oder ähnlichen Materialien wie die Schalenteile 5', 6' hergestellt sein, und dieses Ventilsitz-Bauteil 11 trägt nur den Ventilsitz 8'. Hierdurch können die Schalenteile 5', 6' unabhängig von der Ausgestaltungsform des Ventilsitzes 8' ausgelegt und gefertigt werden.

Zur Herstellung der beispielsweise in Figur 3 gezeigten Ausführungsform des Ventilgehäusekörpers 10 werden nach Art eines Baukastens vorgefertigte Schalenteile 5', 6' und ein entsprechend gewünschtes und geeignetes Ventilsitz-Bauteil 11 mit der für die Ventil bauart geeigneten Ventilsitzkonstruktion zusammengestellt und in der jeweils gewünschten Weise relativ zueinander vorzugsweise mittels Verdrehen ausgerichtet. Nach der Durchführung dieser Ausrichtarbeiten und nach der Zwischenlage des scheibenförmigen Ventilsitz-Bauteils 11 an der Trennlinie 7 des Ventilgehäusekörpers 10 werden dann die beiden Schalenteile 5', 6' und das Ventilsitz-Bauteil 11 fest miteinander verbunden, was mittels Schweißen, insbesondere Laserschweißen, Klemmen und/oder Spannen insbesondere einer Triclampverbindung, mittels einer Verschraubung mit einer Flanschverbindung oder dergleichen erfolgen kann. Durch eine solche Ausgestaltungsform des Ventilgehäusekörpers 10 lassen sich die Schalenteile 5', 6' weitgehend unabhängig von der Ventilsitzkonstruktion gestalten und fertigen. Gleiches oder ähnliches gilt auch für das Ventilsitz-Bauteil 11, welches bei der dargestellten bevorzugten Ausführungsform lediglich als Ventilsitz-Tragteil dient. Durch diese Konstruktion kann auch der Ventilsitz 8' sicher und stabil in den Schalenteilen 5', 6' des Ventilgehäusekörpers 10 abgestützt werden, so dass an dem Ventilsitz 8' auch die im Betriebszustand auftretenden Schließ- und Beaufschlagungskräfte zuverlässig aufgenommen werden können.

Ferner lässt sich das Ventilsitz-Bauteil 11 auch strömungsgünstig konturieren, um die Fluidströmung im Innern des Ventilgehäusekörpers 10 möglichst wenig zu stören.

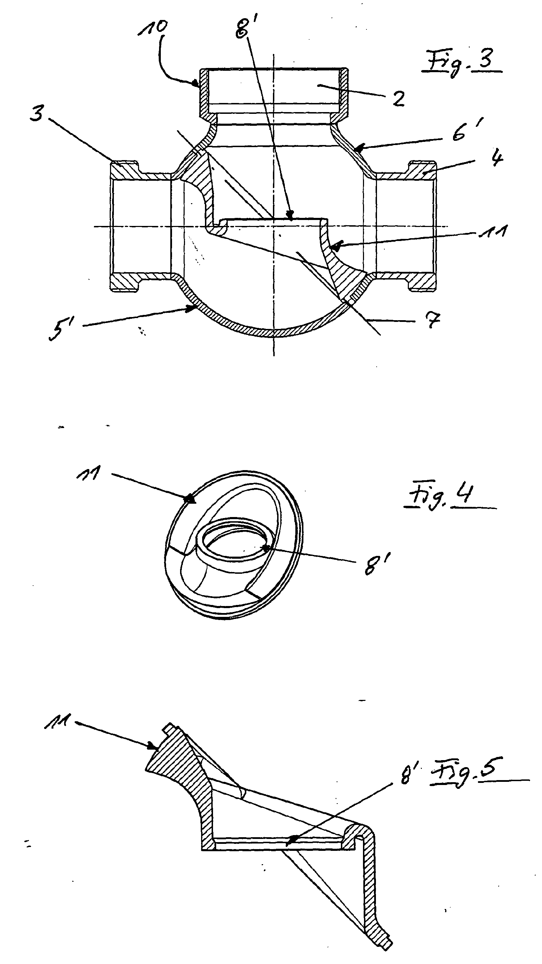

Die Figuren 4 und 5 dienen zur Verdeutlichung der in Figur 3 gezeigten bevorzugten Ausführungsform des Ventilsitz-Bauteils 11. Wie gezeigt, hat das Ventilsitz-Bauteil 11 insbesondere nach Figur 5 auch stirnseitig Zentrieransätze, um die relativen Ausrichtarbeiten von Schalenteilen 5', 6' und Ventilsitz-Bauteil 11 beim Zusammensetzen zu erleichtern.

Selbstverständlich ist die Erfindung nicht auf die anhand der bevorzugten Ausführungsform erweiterten Einzelheiten beschränkt, sondern es sind zahlreiche Abänderungen und Modifikationen möglich, die der Fachmann im Bedarfsfall treffen wird, ohne den Erfindungsgedanken zu verlassen. Insbesondere ist es wesentlich, dass der Ventilgehäusekörper 1 in Form einer Hohlkugel ausgelegt ist, welche vorzugsweise zwei Schalenteile umfasst, denen dann der Zugang 3 oder die Zugänge 3 und/oder der Einbaudurchgang 2 für das mit dem Ventilsitz zusammenarbeitende Schließelement einerseits und andererseits der Ausgang 4 oder die Ausgänge 4 zugeordnet sind. Auf diese Weise lässt sich ein Ventilgehäusekörper 1 nach Maßgabe eines Baukastenprinzips für die jeweils vom Anwender geforderten Spezifikationen auf kostengünstige Weise anpassen.

### Bezugszeichen

- 1: Ventilgehäusekörper
- 2: Einbaudurchgang
- 3: Zugang
- 4: Ausgang
- 5, 5': Schalenteile für Zugang
- 6, 6': Schalenteile für Ausgang
- 7: Trennlinie
- 8, 8': Ventilsitz
- 9: Zentrieransätze
- 10: Ventilgehäusekörper (Fig. 3 bis 5)

## Patentansprüche

1. Ventilgehäusekörper, insbesondere für ein Sitzventil, mit einem Einbaudurchgang (2) für ein Stellglied für ein Schließelement, welches mit wenigstens einem Ventilsitz (8; 8') im Gehäuseinnenraum zusammenarbeitet, wenigstens einem Zugang (3) und wenigstens einem Ausgang (4), **dadurch gekennzeichnet, dass** der Gehäusekörper (1; 10) in Form einer Hohlkugel ausgelegt ist und wenigstens zwei Schalenteile (5, 6; 5' 6') umfasst, wobei eines der Schalenteile (5; 5') den Einbaudurchgang (2) für das Stellglied, gegebenenfalls den Ventilsitz (8; 8') und den wenigstens einen Zugang (3) und das andere Schalenteil (6; 6') den wenigstens einen Ausgang (4) aufweist.

2. Ventilgehäusekörper nach Anspruch 1, **dadurch gekennzeichnet, dass** der hohlkugelförmige Gehäusekörper (1; 10) längs einer Durchmessertrennlinie (7) geteilt ist, die außerhalb des Einbaudurchgangs (2), des wenigstens einen Zugangs (3) und des wenigstens einen Ausgangs (4) liegt.

3. Ventilgehäusekörper nach Anspruch 1 oder 2, **dadurch gekennzeichnet, dass** der hohlkugelförmige Gehäusekörper (1; 10) in einer Schnittebene geteilt ist, die etwa unter 45 ° zur Kugelhauptachse verläuft.

4. Ventilgehäusekörper nach einem der vorangehenden Ansprüche, **dadurch gekennzeichnet, dass** die Schalenteile (5, 6; 5', 6') mittels Schweißen, insbesondere Laserschweißen, Klemmen und/oder Spannen, insbesondere einer Triclampverbindung, mittels einer Verschraubung mit einer Flanschverbindung oder dergleichen fest miteinander verbunden sind.

5. Ventilgehäusekörper nach einem der vorangehenden Ansprüche, **dadurch gekennzeichnet, dass** die Schalenteile (5, 6; 5', 6') aus Kunststoff, vorzugsweise mittels Spritzgießen, hergestellt sind.

6. Ventilgehäusekörper nach einem der Ansprüche 1 bis 4, **dadurch gekennzeichnet, dass** die Schalenteile (5, 6; 5', 6') aus metallischem Material, insbesondere Edelstahl, vorzugsweise mittels Tiefziehen, hergestellt sind.

7. Ventilgehäusekörper nach einem der vorangehenden Ansprüche, **dadurch gekennzeichnet, dass** der oder die Ausgänge (4) variabel am zugeordneten Schalenteil (6; 6') befestigbar sind.

8. Ventilgehäusekörper nach einem der vorangehenden Ansprüche, **dadurch gekennzeichnet, dass** der Ventilsitz (8; 8') möglichst nahe zum Ausgang (4) angeordnet ist.

9. Ventilgehäusekörper nach einem der vorangehenden Ansprüche, **dadurch gekennzeichnet, dass** der Zugang (3) im Gehäuseinnenraum mittels stegförmigen Abstützungen gehalten ist.

10. Ventilgehäusekörper nach einem der vorangehenden Ansprüche, **dadurch gekennzeichnet, dass** im Innenraum des hohlkugelförmigen Gehäusekörpers (1; 10) wenigstens ein Drucksensor angeordnet ist.

11. Ventilgehäusekörper nach einem der vorangehenden Ansprüche, **dadurch gekennzeichnet, dass** der Ventilgehäusekörper (1, 10) als Mehrwegeventil ausgelegt ist.

12. Ventilgehäusekörper nach einem der vorangehenden Ansprüche, **dadurch gekennzeichnet, dass** an der Schnittstelle (7) der Schalenteile (5, 6; 5', 6') Zentrieransätze (9) zur wechselseitigen Ausrichtung vorgesehen sind.

13. Ventilgehäusekörper nach einem der vorangehenden Ansprüche, **dadurch gekennzeichnet, dass** eines der Schalenteile (6) mehrere Ausgänge (4) aufweist, welche gegebenenfalls unterschiedliche Nenndurchmesser haben.

14. Ventilgehäusekörper nach einem der vorangehenden Ansprüche, **dadurch gekennzeichnet, dass** für den Ventilsitz (8') ein zu den Schalenteilen (5', 6') gesondertes Bauteil (11) vorgesehen ist.

15. Ventilgehäusekörper nach Anspruch 14, **dadurch gekennzeichnet, dass** die Schalenteile (5', 6') relativ zu dem Bauteil (11) mit dem Ventilsitz (8') vorzugsweise durch Verdrehen ausrichtbar sind.

16. Ventilgehäusekörper nach Anspruch 14 oder 15, **dadurch gekennzeichnet, dass** das Bauteil (11) mit dem Ventilsitz (8') nach der Ausrichtung zu den Schalenteile (5', 6') fest mit diesen vorzugsweise mittels Schweißen, insbesondere Laserschweißen, Klemmen und/oder Spannen, insbesondere einer Triclampverbindung, mittels einer Verschraubung mit einer Flanschverbindung oder dergleichen fest miteinander verbunden sind.

17. Ventilgehäusekörper nach einem der Ansprüche 14 bis 16, **dadurch gekennzeichnet, dass** das Bauteil (11) mit dem Ventilsitz (8') scheibenförmig ausgebildet ist.

18. Ventilgehäusekörper nach einem der Ansprüche 14 bis 17, **dadurch gekennzeichnet, dass** das Bauteil (11) mit dem Ventilsitz (8') an der Durchmessertrennlinie (7) der Schalenteile (5', 6') zwischengelegt ist.
